# EUROPÄISCHE PATENTANMELDUNG

(11) **EP 4 779 294 A1**
(43) Veröffentlichungstag der Anmeldung: **22.07.2026**
(21) Anmeldenummer: 25152862.6
(22) Anmeldetag: 20.01.2025
(51) Int. Cl.: G01N 21/64, G01N 21/84, G01N 21/94, G01N 21/77

(54) **VERFAHREN ZUR ERMITTLUNG DER INTENSITÄT DER LUMINESZENZ VON IN EINEM TESTFELD VORHANDENEN MARKERN**

(71) Anmelder: FZMB GmbH Forschungszentrum für Medizintechnik und Biotechnologie, 99947 Bad Langensalza (DE)
(72) Erfinder: HENZE, Stephan, 99947 Bad Lagensalza (DE); CORRENS, Nico, 99425 Weimar (DE)
(74) Vertreter: dompatent

(57) **Zusammenfassung**

Mit der Erfindung kann das Nachleuchten einer Fluorophore durch Beobachtung mit einer rolling-shutter Kamera (14) unter gepulster Beleuchtung sichtbar gemacht werden. Bildteile, die während einer Dunkelphase (34) erfasst wurden, enthalten nur das von langlebigen Fluorophoren ausgestrahlte Licht. Dadurch wird die bildgebende Erfassung von langlebigen Fluoreszenzen mittels preisgünstiger, weit verfügbarer CMOS-Kameras ohne bewegte Teile und ohne Bildverstärker sowie ohne Synchronisation von Kamera und gepulster Beleuchtung ermöglicht.

## Beschreibung

Die Erfindung betrifft ein Verfahren zur Ermittlung der Intensität der Lumineszenz von in einem Testfeld vorhandenen Markern z.B. eines Immunoassays, z.B. eines Lateral-Flow-Assays, vorhandenen Markern mit einer bekannten, für den Zeitverlauf der Lumineszenz repräsentativen Zeitkonstante, wobei das Testfeld zumindest in einem Teilbereich für Anregungslicht reflektierend ist.

Die Ermittlung der Intensität einer Lumineszenz von Markern stellt sich in vielfältiger Weise als Anforderung in der Medizin, in der Medizintechnik, in der Biologie und in der Diagnostik, wobei auf diesen Gebieten oftmals Fluoreszenz-Intensitäten von Interesse sind. Daher wird im Folgenden zur Einführung in das Thema der Lumineszenz und der Lumineszenzlebensdauer Bezug genommen auf die physikalischen Erscheinungen bei der Fluoreszenz.

Bei der Erstellung von Fluoreszenzaufnahmen müssen Fluoreszenz- und Anregungslicht voneinander getrennt werden. Für optimalen Kontrast darf nur das Fluoreszenzlicht einen Beitrag zum Bild leisten, bzw. Fluoreszenz- und Anregungslicht müssen eindeutig unterscheidbar in unterschiedlichen Kanälen abgebildet werden. Dies geschieht normalerweise durch paarweise blockende Fliter, die gemeinsam das Anregungslicht unterdrücken. Diese Filter sind teuer. Sie erreichen ihre volle Leistung nur unter bestimmten Einfallswinkeln, wodurch die Erfassung großer Gesichtsfelder nur mit wird bzw. speziellen Objektiven (Teil des Strahlengangs mit Konjugat im Unendlichen) möglich ist.

Alternativ ist die Unterscheidung von Anregungs- und Fluoreszenzlicht anhand der Fluoreszenzlebensdauer möglich.

Die Fluoreszenzlebensdauer gibt die mittlere Zeit an, die ein Molekül in einem angeregten Zustand bleibt, bevor es ein Photon emittiert und damit in den Grundzustand zurückkehrt. Sie liegt in der Größenordnung von 10⁻⁹ s - 10⁻⁷ s. Der Zerfall der Fluoreszenz folgt dabei einem exponentiellen Gesetz.

Typische Fluoreszenzlebensdauern liegen im Bereich von wenigen Nanosekunden. Dabei ist zu beachten, dass es sich hier um einen spinerlaubten Vorgang (Fluoreszenz) handelt. Beim spinverbotenen Vorgang (Phosphoreszenz) ergeben sich um Größenordnungen längere Lebenszeiten im Bereich von Millisekunden bis Stunden.

Die Fluoreszenzlebensdauer ist in der Spektroskopie und Mikroskopie (Fluoreszenzlebensdauer-Mikroskopie) ein wichtiger Messparameter, der zur Unterscheidung verschiedener (auch gleichfarbiger) Fluorophore dient. Darüber hinaus kann die Fluoreszenzlebensdauer wichtige Informationen über die chemische Umgebung eines Fluorophors liefern und Energietransfermechanismen wie den Förster-Resonanzenergietransfer aufdecken.

Zum Beispiel wird in einer Zelle die Fluoreszenzlebensdauer durch die nähere Umgebung des Fluorophors beeinflusst, d. h. die Fluorophore können als Messsonden der Umgebung dienen.

Die Ermittlung von Fluoreszenzlebensdauern erfordert die zeitaufgelöste Aufzeichnung der Intensität emittierter Strahlung. Ein gängiges Verfahren dafür ist die zeitkorrelierte Einzelphotonenzählung (TCSPC). Dabei erfolgt die Anregung der Probe periodisch mit monochromatischen Lichtblitzen geringer Intensität (Laser, Nanosekunden-Blitzlampe). Die Detektion der Fluoreszenz erfolgt bei einer größeren Wellenlängen, als der zur Anregung verwendeten Wellenlänge (Monochromator auf Emissionsseite der Versuchsanordnung) mit einem Sekundärelektronenvervielfacher (Photomultiplier, PMT), der in der Lage ist, einzelne Photonen zu registrieren. Wird das Licht der Anregungslichtquelle so stark abgeschwächt, dass nur noch nach ein bis fünf Prozent der Lichtblitze ein Signal registriert wird, so kann davon ausgegangen werden, dass es sich um die Registrierung einzelner Photonen handelt. Mit einer elektronischen Schaltung werden Zeitmessungen durchgeführt, die von einem zusätzlichen Detektor (Photodiode) direkt an der Lichtquelle gestartet und vom Signal des Fluoreszenzdetektors gestoppt werden. Durch die Diskretisierung des Zeitsignals erhält man nach Durchlaufen vieler Anregungs-/Messzyklen ein (von der Auflösung der eingesetzten Analog-Digital-Wandler abhängiges) Histogramm, dessen Einhüllende dem Signal einer analogen Aufzeichnung des zeitaufgelösten Intensitätsverlaufs der Fluoreszenz nach einem einzelnen Anregungsimpuls hoher Leistung entspricht.

Eine andere Methode ist die Messung im Frequenzbereich (Phasenfluorometrie). Hierbei wird die Probe mit einem intensitätsmodulierten Licht bestrahlt. Detektiert wird das emittierte Fluoreszenzlicht, das mit der gleichen Frequenz moduliert ist. Allerdings wird die Modulationsamplitude verringert und es tritt eine Phasenverschiebung auf.

CMOS-Kamerasensoren arbeiten mit unterschiedlichen Shutter-Konzepten. Kameras mit z.B Global-Shuttern werden in den meisten Bildverarbeitungssystemen eingesetzt. Der Vorteil eines Global-Shutters ist, dass alle Pixel des Sensors gleichzeitig für eine definierte Zeit, die Belichtungszeit, belichtet werden können.

In Sensoren mit Global Reset bzw. Global-Start-Shutter startet die Belichtung aller Pixel gleichzeitig (wie beim Global-Shutter) und enden zeilenweise nacheinander (wie beim Rolling-Shutter). Dadurch resultierende unterschiedliche Belichtungszeiten werden durch Verwendung eines mechanischen Zentralverschlusses oder einer Blitzlampe vermieden mit definiertem Ende der Belichtungszeit vermieden.

Bei einem Sensor mit Rolling Shutter hingegen werden die Pixel zeilen- oder spaltenweise nacheinander belichtet, wobei eine Bildperiode (1/Bildfrequenz) benötigt wird, bis alle Pixel auf dem Sensor aktiv bzw. lichtempfindlich sind. Dieser Effekt wird sichtbar, wenn sich ein Objekt bewegt. Sensoren mit Rolling-Shutter ermöglichen Pixelarchitekturen mit weniger Transistoren, was Kosten spart und unter bestimmten Umständen auch zur Verbesserung der Bildqualität führt.

In Xiong, Bo, und Qiyin Fang. "Luminescence Lifetime Imaging Using a Cellphone Camera with an Electronic Rolling Shutter". Optics Letters 45, Nr. 1 (1. Januar 2020): 81. https://doi.org/10.1364/OL.45.000081 wird ein Verfahren zur Messung von Fluoreszenz- bzw. Lumineszenzlebensdauern beschrieben, bei dem eine Kamera mit elektronischem Rolling Shutter eingesetzt wird. Nach dem bekannten Verfahren wird die Farbkamera und deren Rolling Shutter-Effekt genutzt, um die Phasenverschiebung von Anregungslicht und Fluoreszenzsignal zu messen.

Aufgabe der Erfindung ist es, die Ermittlung der Intensität einer Lumineszenz von in einem Testfeld vorhandenen Markern zu vereinfachen.

Zur Lösung dieser Aufgabe betrifft die Erfindung gemäß einer ersten Variante ein Verfahren zur Ermittlung der Intensität der Lumineszenz von in einem Testfeld z.B. eines Immunoassays, z.B. eines Lateral-Flow-Assays, vorhandenen Markern mit einer bekannten, für den Zeitverlauf der Lumineszenz repräsentativen Zeitkonstante, wobei das Testfeld zumindest in einem Teilbereich für Anregungslicht reflektierend ist und wobei bei dem Verfahren
- das Testfeld mit gepulstem Anregungslicht beleuchtet wird, das eine Pulsperiode und eine Pulsdauer aufweist,
- das gepulst beleuchtete Testfeld mittels einer einen Rolling-Shutter-Bildsensor mit einem 2D-Photodiodenarray aufweisenden Kamera aufgenommen wird, wobei der Bildsensor unter Verwendung einer Bildperiode, die der Kehrwert der Bildwiederholrate ist, einer Zeilenfrequenz für die sequenzielle Weiterschaltung der Aktivierung einer Zeile von Photodioden des 2D-Photodiodenarrays, einer Integrationsdauer, für die eine Zeile aktiv geschaltet bleibt, und einer Bildaufnahmedauer betrieben wird, innerhalb der sämtliche Zeilen von Photodioden des 2D-Photodiodenarrays einmal aktiviert worden sind, wobei jede Photodiode ein für die jeweilige Intensität von empfangenem Licht repräsentatives Signal liefert,
- die Pulsperiode des Anregungslichts höchstens gleich der Bildaufnahmedauer des Bildsensors ist,
- infolge der gepulsten Beleuchtung durch die Kamera Bilder des Testfeldes aufgenommen werden, die wechselweise aufeinanderfolgende parallele helle und dunkle Streifen aufweisen, wobei die hellen Streifen infolge von Reflektion des Anregungslichts aus dem Testfeld und infolge der Lumineszenz potenzieller Marker und/oder infolge einer potenziellen Autolumineszenz des Testfeldes entstehen und wobei die dunklen Streifen infolge des in einer Beleuchtungspause zwischen zwei aufeinanderfolgenden Beleuchtungspulsen unterbleibenden Anregungslichts entsteht,
- diese Streifen stationär in den Bildern sind, sofern die Pulsperiode ein ganzzahliger Bruchteil der Bildperiode ist, und sich zwischen aufeinanderfolgenden Bildern verschieben, sofern die Pulsperiode ein nicht-ganzzahliger Bruchteil der Bildperiode ist,
- wobei dann, wenn sich im Testfeld Marker befinden, innerhalb der dunklen Streifen zumindest einige der Photodioden einiger Zeilen des 2D-Photodiodenarrays eine Lumineszenz detektieren, was sich in einem oder mehreren der dunklen Streifen der Bilder als Linien- oder Bandbereiche zeigt, die unter abklingender Intensität quer zur Erstreckung der hellen und dunklen Streifen ausgehend von einem hellen Streifen zu dem auf diesen zeitlich folgenden benachbarten dunklen Streifen verlaufen, und
- wobei anhand der abklingenden Helligkeit der Lumineszenz innerhalb eines dunklen Streifens und der bekannten, den Zeitverlauf der Lumineszenz-Lebensdauer definierenden Zeitkonstante auf die Intensität der Lumineszenz zu einem vorgegebenen Referenzzeitpunkt geschlossen wird.

Sinngemäß wird mit der Erfindung vorgeschlagen, die Lumineszenzintensität und Lumineszenzlebensdauer unter Verwendung eines Bildsensors zu vermessen, der nach dem Rolling-Shutter Konzept arbeitet. Das Objekt- bzw. Testfeld wird mit einer zeitlich in ihrer Intensität modulierten Lichtquelle beleuchtet, und zwar mit einer gepulsten Lichtquelle. Eine Kameravorrichtung mit Rolling-Shutter Bildsensor zeichnet die Helligkeitsverteilung während der Dauer der Anregungsbeleuchtungspulse und während der Dauer der Beleuchtungspausen auf. Mittels eines Bildverarbeitungsalgorithmus werden auszuwertende Bereiche der Bilder ausgewählt und aus der Verteilung der Helligkeit für jede Bildzeile in den auszuwertenden Bereichen die relative Intensität der Lichtquelle zum Zeitpunkt der Erfassung der Bildzeile ermittelt. Für Bildzeilen, die zu Zeitpunkten mit minimaler Intensität erfasst wurden, wird das Zeitintervall seit dem Erreichen dieser Intensität ermittelt und den Bildzeilen zugeordnet. Optional erfolgt dies für Bildzeilen, die zu Zeitpunkten mit maximaler Intensität erfasst wurden, wobei die seit dem Einschalten der gepulsten Lichtquelle vergangene Zeit ermittelt wird. Aus den Bildern werden Partialbilder extrahiert, welche aus Bildzeilen mit jeweils gleichem zugeordnetem Zeitintervall bestehen. Aus Partialbildern, welche gleiche zugeordnete Zeitintervalle aufweisen, werden rekonstruierte Bilder zusammengesetzt, so dass jedes rekonstruierte Bild die über das zugeordnete Zeitintervall gemittelte Helligkeitsverteilung im Objektfeld widerspiegelt.

Eine Besonderheit der Erfindung ist die Modulation der Anregungslichtquelle durch Pulsen. Dabei ist es von Vorteil, wenn die Intensität des Anregungslichts beim Ausschalten, also am Ende eines Beleuchtungspulses innerhalb kürzester Zeit auf mindestens 50% oder mindestens 40% oder mindestens 30% oder mindestens 20% und insbesondere auf nahezu 0% abfällt. Die Dauer, innerhalb der es zu diesem Intensitätsabfall des Anregungslichts kommen sollte, ist geringer als die Umschaltzeit, die der Rolling-Shutter für die Weiterschaltung (Aktivierung) einer Fotodiodenzeile oder-Spalte benötigt.

Wie bereits oben beschrieben, werden die Pixel eines Sensors mit Rolling-Shutter zeilen- oder spaltenweise nacheinander belichtet. Die Dauer, für die eine Pixelzeile- oder Pixelspalte aktiviert ist (d.h. belichtet ist), wird Integrationszeit genannt. Beim Rolling-Shutter Konzept können sukzessive ein- oder mehrere Zeilen bzw. Spalten belichtet, d.h. aktiviert sein. Die Integrationszeit ist dann entsprechend kürzer oder länger. Wenn beispielsweise die Weiterschaltungsdauer, also die Aktivierungszeit, pro Zeile bzw. Spalte 10 µs besteht, dann währe bei einem Rolling-Shutter Konzept, bei dem immer nur eine Zeile bzw. Spalte aktivgeschaltet ist, die Integrationszeit gleich der Aktivierungszeit einer Zeile. Bei einem Rolling-Shutter Konzept, bei dem mehrere Zeilen oder Spalten von Pixeln einander zeitlich überlagernd aktiviert sind, erhöht sich die Integrationszeit entsprechend. Sind beispielsweise jeweils zwei benachbarte Zeilen oder Spalten von Pixeln sukzessive aktiviert miteinander überlappenden Aktivierungszeiten, so würde die eine Spalte für 10 µs aktiviert sein, bevor die benachbarte Zeile bzw. Spalte aktiviert wird. Während der Aktivierung der benachbarten Zeile bzw. Spalte ist die zuerst genannte Zeile bzw. Spalte weiterhin aktiviert. Die Aktivierungszeit für diese besagte Zeile bzw. Spalte endet in dem Augenblick, in dem die der zweiten Spalte benachbarte dritte Spalte aktiviert wird. Auf diese Weise "durchwandern" also jeweils zwei benachbarte Zeilen oder Spalten von Pixeln das 2D-Photodiodenarray des Sensors. Die Integrationszeit wäre dann also 20 µs (bei einer jeweiligen Weiterschaltung von Zeile zu Zeile von 10 µs).

In vorteilhafter Weiterbildung der Erfindung ist vorgesehen,
- dass mit der Kamera so viele Bilder aufgenommen werden, bis jede Zeile von Photodioden des 2D-Photodiodenarrays während mindestens zweier Beleuchtungspulse aktiviert wird und/oder aktiviert bleibt, wobei der jeweilige zeitliche Abstand vom Ende des jeweiligen vorhergehenden Beleuchtungspulses unterschiedlich ist, und
- dass anhand der während der besagten mindestens zwei Beleuchtungspulse von einer oder mehreren Photodioden einer solchen Zeile gelieferten, für die Lumineszenzintensität repräsentativen Signale und anhand des durch die bekannte Zeitkonstante repräsentierten Zeitverlaufs der Lumineszenz-Lebensdauer auf die Intensität zu einem vorgegebenen Referenzzeitpunkt geschlossen wird.

Gemäß dieser Ausführungsform der Erfindung umfassen die mit der Kamera aufgenommenen Bilder solche Bilder, bei denen jede Zeile von Photodioden des 2D-Photodioden Arrays während mindestens zweier Beleuchtungspausen aktiviert ist/oder aktiviert bleibt, wobei allerdings der jeweilige zeitliche Abstand vom Ende des jeweils vorhergehenden Beleuchtungspulses unterschiedlich ist. Die abklingende Lumineszenzintensität wird somit zu zwei verschiedenen Zeitpunkten durch die Photodioden der beiden besagten Zeilen erfasst. Aufgrund der bekannten Zeitkonstante kann dann zu einem vorgegebenen Referenzzeitpunkt auf die dann gegebene Intensität der Lumineszenz geschlossen werden.

Vorteilhaft ist es ferner, wenn der Referenzzeitpunkt das Ende des einen hellen Streifen verursachenden Beleuchtungspulses oder das Ende der auf einen Beleuchtungspuls folgenden Beleuchtungspause ist.

In weiterer vorteilhafter Ausgestaltung der Erfindung ist vorgesehen,
- dass mit der Kamera so viele Bilder aufgenommen werden, dass jede Zeile von Photodioden des 2D-Photodiodenarrays zumindest einmal zu demjenigen Zeitpunkt aktiviert wird und/oder ist, der den Beginn der auf das Ende eines Beleuchtungspulses folgenden Beleuchtungspause definiert, und
- dass dieser Zeitpunkt der Referenzzeitpunkt und das von einer Photodiode einer Zeile gelieferte Signal die zu ermittelnde Intensität der Lumineszenz repräsentiert.

Bei diesem Ausführungsbeispiel der Erfindung ist das Ende eines Beleuchtungspulses der Referenzzeitpunkt, zu dem die Intensität der Lumineszenz zu ermitteln ist.

Während bei der oben beschriebenen ersten Variante der Erfindung das Testfeld lichtreflektierende Eigenschaften aufweist, kann dieses Testfeld bei einer zweiten Variante der Erfindung zusätzlich kurzlebige zweite Marker, deren Lumineszenz-Lebensdauer deutlich kürzer und insbesondere mindestens zwei Größenordnungen, das heißt mindestens zwei 10er Potenzen kürzer als die der ersten Marker ist, aufweisen, die ebenfalls zu der Entstehung der hellen Bildbereiche beitragen, wobei bei diesem Verfahren
- die Lumineszenz-Lebensdauer der zweiten Marker kürzer als 0,01 der Lumineszenz-Lebensdauer der ersten Marker ist,
- das Testfeld mit gepulstem Anregungslicht beleuchtet wird, das eine Pulsperiode und eine Pulsdauer aufweist,
- das gepulst beleuchtete Testfeld mittels einer einen Rolling-Shutter-Bildsensor mit einem 2D-Photodiodenarray aufweisenden Kamera aufgenommen wird, wobei der Bildsensor unter Verwendung einer Bildperiode, die der Kehrwert der Bildwiederholrate ist, einer Zeilenfrequenz für die sequenzielle Weiterschaltung der Aktivierung einer Zeile von Photodioden des 2D-Photodiodenarrays, einer Integrationsdauer, für die eine Zeile aktiv geschaltet bleibt, und einer Bildaufnahmedauer betrieben wird, innerhalb der sämtliche Zeilen von Photodioden des 2D-Photodiodenarrays einmal aktiviert worden sind, wobei jede Photodiode ein für die jeweilige Intensität von empfangenem Licht repräsentatives Signal liefert,
- die Pulsperiode des Anregungslichts höchstens gleich der Bildaufnahmedauer des Bildsensors ist und,
- infolge der gepulsten Beleuchtung durch die Kamera Bilder des Testfeldes aufgenommen werden, die wechselweise aufeinanderfolgende parallele helle und dunkle Streifen aufweisen, wobei die hellen Streifen infolge von potenzieller Reflektion des Anregungslichts aus dem Testfeld und infolge der Lumineszenz potenzieller erster Marker und infolge einer potenziellen Autolumineszenz des Testfeldes und infolge der Lumineszenz der zweiten Marker entstehen und wobei die dunklen Streifen infolge des unterbleibenden Anregungslichts in einer Beleuchtungspause zwischen zwei aufeinanderfolgenden Beleuchtungspulsen entsteht,
- wobei dann, wenn sich im Testfeld erste Marker befinden, innerhalb der dunklen Streifen zumindest einige der Photodioden einiger Zeilen des 2D-Photodiodenarrays eine Lumineszenz detektieren, was sich in einem oder mehreren der dunklen Streifen der Bilder als Linien- oder Bandbereiche zeigt, die unter abklingender Intensität quer zur Erstreckung der hellen und dunklen Streifen ausgehend von einem hellen Streifen zu dem auf diesen zeitlich folgenden benachbarten dunklen Streifen verlaufen,
- wobei mit der Kamera so viele Bilder aufgenommen werden, dass jede Zeile von Photodioden des 2D-Photodiodenarrays zumindest einmal zu demjenigen Zeitpunkt aktiviert wird und/oder ist, der den Beginn der auf das Ende eines Beleuchtungspulses folgenden Beleuchtungspause definiert, und
- wobei dieser Zeitpunkt der Referenzzeitpunkt und das von einer Photodiode einer Zeile gelieferte Signal die zu ermittelnde Intensität der Lumineszenz repräsentiert.

Nach der Erfindung lässt sich schließlich auch die Gesamtheit an Markern in einem Testfeld z.B. eines Immunoassays , z.B eines Lateral-Flow-Assays bestimmen, wobei die Marker eine bekannte Lumineszenz-Lebensdauer und die Intensität der Lumineszenz proportional zur Menge an Marken ist, wobei bei diesem Verfahren
- mittels eines der oben genannten Verfahren die Intensität der Lumineszenz zu einem Referenzzeitpunkt ermittelt wird und
- anhand der Größe des Signals jeder Lumineszenz erfassenden Photodiode und der bekannten Proportionalität der Menge an Markern zur Lumineszenzintensität eine Teilmenge an Markern bestimmt wird und
- durch Addition sämtlicher derart bestimmter Teilmengen an Markern die Gesamtmenge an Markern in dem Testfeld und/oder
- anhand der Teilmengen an Markern die Verteilung des Markers innerhalb des Testfeldes ermittelt wird.

Bei dieser Variante der Erfindung wird also die bekannte Proportionalität von Lumineszenz-Intensität und Markermenge ausgenutzt, wobei die Bestimmung der Markermenge und deren Verteilung entsprechend einem der zuvor genannten Verfahren bestimmt werden kann.

Schließlich lässt sich auf Basis der Erfindungsgemäßen Verfahren eine Probe auch auf Verunreinigungen überprüfen, wobei die Probe Lumineszenz-Marker mit bekannter, für den Zeitverlauf der Lumineszenz-Lebensdauer repräsentativer Zeitkonstanten aufweist und wobei bei dem Verfahren aus den mindestens zwei Lumineszenz-Intensitäten zu zwei verschiedenen Zeitpunkten der Zeitverlauf der Lumineszenz-Lebensdauer gebildet wird und anhand dieses Zeitverlaufs die diesen repräsentierende Zeitkonstante ermittelt wird, die mit der bekannten und zu erwartenden Zeitkonstante der Lumineszenz-Lebensdauer der Lumineszenz-Marker verglichen wird und einer Abweichung beider Zeitkonstanten ein Anzeichen für eine Verunreinigung der Probe ist.

Dieses Konzept kann dadurch weitergebildet werden, dass für mindestens eine Verunreinigungssubstanz in der Probe die Zeitkonstante der Lumineszenz-Lebensdauer bekannt ist und dass durch Vergleich der ermittelten Zeitkonstante mit der besagten mindestens einen Zeitkonstante erkannt wird, ob die Probe mit der Verunreinigungssubstanz verunreinigt oder mit welcher von mehreren potentiellen Verunreinigungssubstanzen die Probe verunreinigt ist.

Letztendlich kann die Intensität der Lumineszenz von in einer Probe vorhandenen Lumineszenz-Markern mit bekannter für den Zeitverlauf der Lumineszenz-Lebensdauer repräsentativen Zeitkonstante auch wellenlängenabhängig ermittelt werden, wobei bei diesem Verfahren die Probe entsprechend einem der vorhergehenden Verfahren untersucht wird und eine Spektralanalyse der Lumineszenz durchgeführt wird, indem mittels eines Polychromators die von einer aktivierten Zeile des 2D-Photodiodenarrays empfangene Lumineszenz wellenlängenabhängig von den Photodioden der betreffenden Zeile aufgenommen wird und somit anhand der beiden von einer Photodiode einer solchen Zeile gelieferten für den Verlauf der Lumineszenz-Lebensdauer repräsentativen Signale wellenlängenselektiv auf die Intensität zu einem jeweils vorgegebenen, gemeinsamen Referenzzeitpunkt geschlossen wird.

Im Folgenden wird das erfindungsgemäße Konzept anhand einer spaltenweisen Belichtung/Aktivierung der Pixel eines 2D- Photodiodenarrays erläutert.

Wie oben beschrieben, wird die Anregungslichtquelle gepulst betrieben also getaktet.

Durch das Durchlaufen vieler Anregungs-/Messzyklen wird der zeitaufgelöste Intensitätsverlaufs der Fluoreszenz (oder allgemeiner der Lumineszenz) ermittelt.

Hierbei sind zwei Fälle zu unterscheiden:
Im ersten Fall ist die Taktung der Probe hardwareseitig nicht mit dem getakteten Betrieb des Sensors synchronisiert. Die Beleuchtung durch das Anregungslicht hat ihren eigenen Takt, der stabilisiert ist und der ein nicht-ganzzahliges Vielfaches der Bildfrequenz des Bildsensors ist. Die Pulsdauer des Anregungslichts ist dabei kleiner als die Differenz von Integrationsdauer des Bildsensors und Pulsperiode der Beleuchtung. Es entsteht somit eine Art Schwebung. Als Schwebung bezeichnet man den Effekt, dass die Resultierende der additiven Überlagerung (Superposition) zweier Schwingungen, die sich in ihrer Frequenz nur wenig voneinander unterscheiden, eine periodisch zu- und abnehmende Amplitude aufweist.

Da die Pixel zeilenweise nacheinander belichtet werden, kann mit Hilfe der Bildverarbeitung erkannt werden, in welchen Zeilen der Beleuchtungspuls die maximale Energie hatte ("Anregungsszeile"). Da die Zeilen nacheinander belichtet werden ist die Zeitdifferenz zwischen den Belichtungen der Zeilen genau bekannt. Dadurch erhält man nach einem Durchlaufen einiger Anregungs- und Messzyklen eine Aufzeichnung des zeitaufgelösten Intensitätsverlaufs der Fluoreszenz für eine Zeile. Wenn sich dann die "Anregungsszeile" aufgrund der oben erwähnten Unterschiede der Frequenz der Anregungsbeleuchtungspulse und der Wiederholfrequenz des Bildsensors langsam über den Sensor verschiebt, erhält man von dem gesamten zu untersuchenden Testfeld ein Bild der zeitaufgelösten Fluoreszenz (allgemein Lumineszenz-Lebensdauer).

Anhand der abklingenden Helligkeit der Fluoreszenz innerhalb der dunklen Streifen des Bildes, die Aufnahmen von Teilen der Testfläche zeigen, wenn das Anregungslicht ausgeschaltet ist, und anhand der bekannten, den Zeitverlauf der Lumineszenz- bwz. Fluoreszenz-Lebensdauer definierenden Zeitkonstante kann dann auf die Intensität der Fluoreszenz bzw. Lumineszenz zu einem vorgegebenen Referenzzeitpunkt geschlossen werden.

Neben den zuvor beschriebenen/erwähnten dunklen Streifen weist das aufgezeichnete Bild auch helle Streifen auf. Diese hellen Streifen sind nicht für die vorzugnehmenden Untersuchungen zur Ermittlung der Intensität der Lumineszenz aussagekräftig. Entscheidend sind vielmehr die sich zeigenden "Nachleuchtstreifen", die mit dem Übergang eines hellen Streifens zu einem dunklen Streifen beginnen und typischerweise innerhalb des dunklen Streifens an Intensität so weit verlieren, dass sie ins Dunkle dieser dunklen Streifen übergehen.

Entscheidend ist nun, dass möglichst jede Pixelzeile bzw. -spalte den ihr zugeordneten Linienbereich des Testfeldes zum Zeitpunkt des Ausschaltens des Anregungslichtpulses erfasst.

Im zweiten Fall ist die Pulsfrequenz der Lichtquelle ein ganzzahliges Vielfaches der Bildwiederholfrequenz des Bildsensors. Die Pulsdauer des Anregungslichts ist dabei kleiner als die Differenz von Integrationsdauer des Bildsensors und Pulsperiode der Beleuchtung. Dadurch fällt für jedes Bild der Start der Bildaufnahme, also die Aktivierung der ersten Zeile auf den gleichen Zeitpunkt innerhalb einer Pulsperiode. Somit entsteht in über alle Bilder hinweg stationäres Muster aus hellen und dunklen Streifen.

Um nun, wie im ersten Fall, das gesamte Testfeld im Zustand der dunklen Streifen zu erfassen, wird die Kamera um die senkrecht zur Richtung der Streifen um die Breite eines dunklen Streifens verschoben.

Die Bildverarbeitung wird nun analog zum ersten Fall ausgeführt.

Nachfolgend wird die Erfindung anhand eines Ausführungsbeispiels sowie unter Bezugnahme auf die Zeichnung näher erläutert.

Im Einzelnen zeigen:
- Fig. 1: schematisch den Aufbau einer Anordnung aus gepulster Anregungslichtquelle und 2D-Kamera mit Rolling-Shutter-Bildsensor zur Bilderfassung des Testfeldes eines Lateral-Flow-Assays,

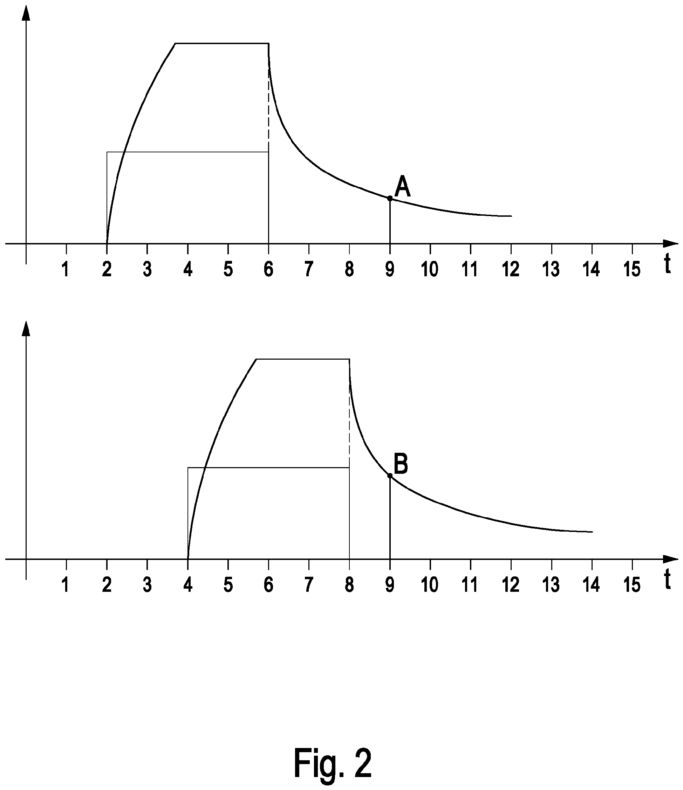

- Fig. 2: ein Beispiel für den Fall, dass ein- und dieselbe Photodiodenzeile- bzw. Spalte, gemäß Fig. 2 ist es die Spalte bzw. Zeile 9, die abklingende Lumineszenz zu zwei unterschiedlichen Zeitpunkten nach dem Ende des vorherigen Beleuchtungspulses erfasst, und zwar im oberen Diagramm der Fig. 2 nach vier Zeiteinheiten und im unteren Diagramm der Fig. 2 nach einer Zeiteinheit, wobei anhand der beiden Intensitätsmesswerte und der bekannten Zeitkonstante der Lumineszenz-Lebensdauer auf die Intensität der Lumineszenz zum Ende des Beleuchtungspulses, in Fig. 2 oberes Diagramm also zum Zeitpunkt der Zeiteinheit 6 und im unteren Diagramm zum Zeitpunkt der Zeiteinheit 8, ermittelbar ist,
- Fig. 3: ein Beispiel für das Rolling-Shutter-Konzept für den Fall, dass jeweils zwei benachbarte Photodiodenzeilen- oder spalten die Aufnahme durchwandern,
- Fig. 4: ein Versuch, das Lumineszenz-Nachleuchten optisch darzustellen, wobei die mit Linien versehenen Streifen helle Streifen des aufgenommenen Bildes und die weißen Bereiche dunkle Streifen darstellen sollen, in denen der Testbalken des Lateral-Flow-Assays sichtbar ist, da sie nachleuchtende lumineszierende Marker aufweist, die sich in der zu untersuchenden Probe befinden und deren zu einem Referenzzeitpunkt gegebene Intensität zu ermitteln ist, und
- Fig. 5: eine graphische Darstellung des Zusammensetzens eines Gesamtbildes der Lumineszenz der Testbalken aus einzelnen Zeilen der "Lichtschweife" in den dunkeln Streifen der Einzelbilder.

Das erfindungsgemäße Konzept soll nachfolgend anhand der Untersuchung der Lumineszenz-Lebensdauer von entsprechenden Markern einer Probe eines Lateral-Flow-Assays beschrieben werden. Der Aufbau des Rolling-Shutter-Prinzips eines Lateral-Flow-Assays soll hier nicht weiter erläutert werden. Beispielhaft sei in diesem Zusammenhang auf WO-A-2021/209576 verwiesen.

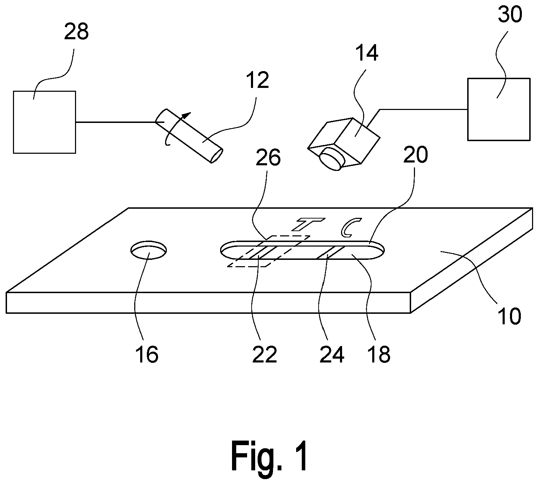

Fig. 1 zeigt schematisch einen Testaufbau mit dem Lateral-Flow-Assay 10, einer gepulsten Anregungslichtquelle 12 und einer 2D-Kamera 14 mit Rolling-Shutter, wie sie beispielsweise in einer Vielzahl von Smartphones anzutreffen ist. Der Lateral-Flow-Assay 10 weist eine Probenaufnahmevertiefung 16 auf, in der eine aufgenommene Probe aufgrund von Kapillarkräften entlang eines Teststreifens 18 in einen freiliegenden Bereich 20 "wandert", in dem der Teststreifen 18 einen Testbalken 22 und einen Kontrollbalken 24 aufweist. Der von der Kamera 14 aufgenommene Bereich ist mit 26 bezeichnet. Die gepulste Anregungslichtquelle 12 wird von einer Ansteuereinheit 28 angesteuert, während die Kamera 14 von einer Ansteuer- und Bildauswerteeinheit 30 angesteuert wird bzw. ihre Bilder ausgewertet werden.

Nach Abschluss des Lateral-Flow-Assays 10 wird das Testfeld, d.h. der Bereich 26, gepulst belichtet und dabei gefilmt. Dabei ist der Takt der gepulsten Anregungslichtquelle 12 ein geringfügig anderer als die Frequenz des Bildsensors der Kamera. Dadurch entsteht eine "Schwebung", was in diesem Fall bedeutet, dass nach und nach ein- und dieselbe Pixelzeile oder -spalte des Bildsensors der Kamera 14 der dieser Zeile bzw. Spalte zugeordnete Bereich in unterschiedlichen Phasen der Beleuchtung und der Beleuchtungspausen erfasst wird.

Damit entsteht beispielsweise eine Situation, wie sie in Fig. 2 gezeigt ist. Zu erkennen ist, dass über einen Zeitraum von vier Zeiteinheiten das Testfeld 26 beleuchtet wird. Mit Beendigung eines Beleuchtungspulses fällt die Lumineszenz exponentiell ab. Da die Zeitkonstante der Lumineszenz-Marker im Testfeld 26 bekannt ist, kann nun anhand von zwei zu unterschiedlichen Zeiten nach Abschluss eines Lichtpulses ermittelten Intensitätswerten auf die Intensität zu einem Referenzzeitpunkt geschlossen werden. Im Beispiel der Fig. 2 erfasst ein und dieselbe Photodiodenzeile bzw. -spalte jeweils zum Zeitpunkt 9 die Intensität der Lumineszenz nach Beendigung eines Beleuchtungspulses. Das besondere ist nun, dass der Zeitpunkt unterschiedlich weit entfernt vom Ende des Beleuchtungspulses ist. Aus den Messwerten A und B kann dann mit der bekannten Zeitkonstante auf beispielsweise den Wert der Lumineszenz zum Ausschaltzeitpunkt des Beleuchtungspulses geschlossen werden.

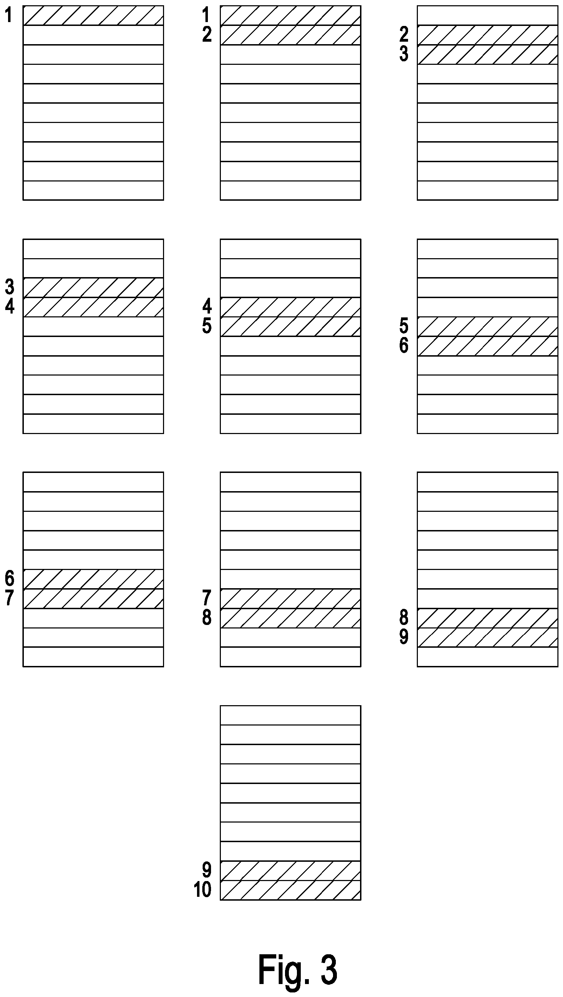

Fig. 3 zeigt graphisch das Rolling-Shutter-Prinzip für einen zweidimensionalen Sensor mit zehn Photodiodenzeilen einer bestimmten Anzahl von Photodioden.

Die Integrationszeit im Ausführungsbeispiel der Fig. 3 beträgt die zweifach Aktivierungszeit einer Pixelzeile. In diesem Fall durchwandern also zwei jeweils überlappend aktivierte Photodiodenzeilen das aufzunehmende Bild.

Nach dem zuvor beschriebenen Konzept- und Messaufbaus wird nun das Testfeld 26 mit dem Testbalken 22 über einen längeren Zeitraum gefilmt, bis jede Pixelzeile bzw. -spalte den ihr zugeordneten Bereich (Zeile oder Spalte) des Testfeldes 26 und des Testbalkens 22 mindestens zwei Mal erfasst hat, und zwar zu unterschiedlichen Zeitpunkten nach Beendigung des jeweils letzten vorherigen Beleuchtungspulses.

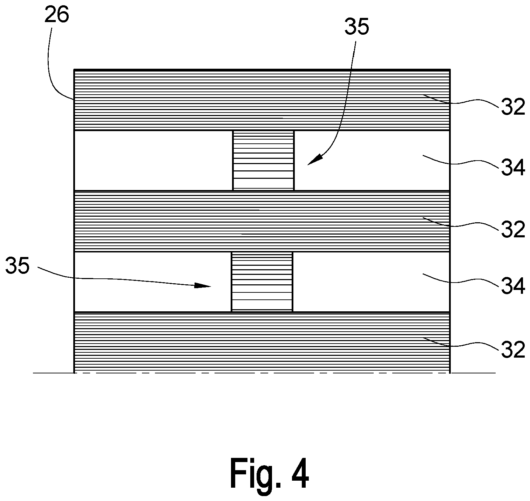

Fig. 4 zeigt eines der aufgenommenen Einzelbilder, das abwechselnd helle Streifen 32 und dunkle Streifen 34 aufweist. Innerhalb der dunklen Streifen 34 bilden sich sozusagen "Lichtschweife" 35, die aus der Lumineszenz-Lebensdauer resultieren. Die Intensität in den hellen Streifen 32 ist durch die Dichte einzelner horizontaler Linien repräsentiert. Die sich mehr und mehr verringernde Intensität der Lumineszenz ist in Fig. 4 durch eine Vergrößerung des Abstandes, d.h. durch eine verringerte Dichte der Linien symbolisiert. Diese Bereiche, in denen Lumineszenz zu erkennen ist, entsprechen dem Testbalken 22 innerhalb des Testfeldes 26.

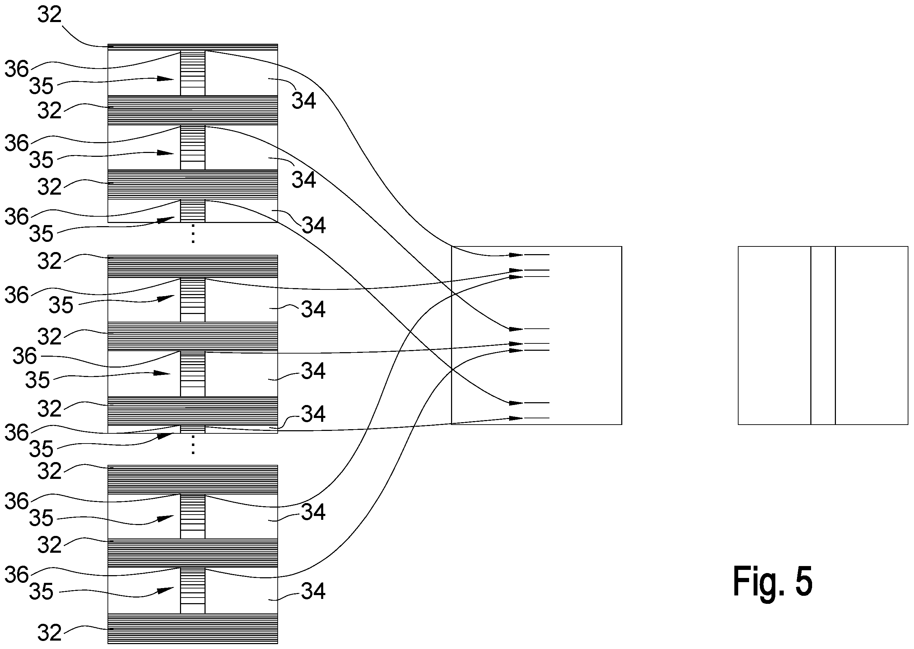

Fig. 5 zeigt nun, wie aus den (links gezeigten) Einzelbildern ein zusammengesetztes Gesamtbild (siehe in der Mitte der Fig. 5) erzeugt wird, das nur die Information aus einer oder einigen wenigen, jeweils auf die hellen Streifen 32 folgenden Zeilen der dunklen Streifen 34 enthält. Die "Lichtschweife" 35 innerhalb der dunklen Streifen 34 sind dadurch zu einem kontinuierlichen Bild zusammengefügt, welches ein vollständiges Abbild der Lumineszenz des Testbalkens 22 darstellt (siehe rechts in Fig. 5).

Aufgrund der weiter oben bereits angesprochenen "Schwebung" sind die hellen Streifen 32 in den Einzelbildern, von denen repräsentativ für sämtliche Einzelbilder in Fig. 5 lediglich drei gezeigt sind, nicht an den gleichen Stellen und insbesondere am oberen Rand (aber auch am unteren Rand, nicht dargestellt) gleich breit. Entscheidend ist, dass jede Zeile des Sensors zumindest einmal die Lumineszenz innerhalb eines "Lichtschweifes" 35 erfasst, und zwar bezogen auf den jeweils vorherigen hellen Streifen 32 an der gleichen Stelle innerhalb eines Lichtschweifs 35, also z. B. an erster Stelle, das heißt als erste Zeile nach einem hellen Streifen 32. Im Ausführungsbeispiel der Fig. 5 wird nun die Lumineszenz über den gesamten Testbalken 22 hinweg zusammengesetzt aus jeweils einer Fotodiodenzeile jedes "Lichtschweifes" 35, wobei die besagte Fotodiodenzeile in jedem "Lichtschweif" 35 an der gleichen Position relativ zum vorherigen hellen Streifen 32 ist. Dies ist in Fig. 5 durch die Linien und Pfeile zwischen den drei links gezeigten Darstellungen und der Darstellung in der Mitte verdeutlicht. Auf diese Weise ergibt sich eine Darstellung der Lumineszenz über den gesamten Testbalken 22, wie in Fig. 5 rechts gezeigt.

Das erfindungsgemäße Verfahren wurde anhand eines Lateral-Flow-Assays mit Detektorkonjugat aus Europium Eu3+ dotierten Nanopartikeln getestet. Bei gepulster Beleuchtung wurde der Teststreifen mit einer Smart-Phone-Kamera gefilmt. Aus dem Film wurde mit Hilfe des hier beschriebenen Verfahrens eine Aufnahme des Nachleuchtens der Marker zusammengesetzt. Mittels Bildverarbeitung wurden die Test- und Kontrollbande des Teststreifens quantitativ erfasst und das Testergebnis berechnet.

Eine 365 nm-LED als gepulste Belichtungsquelle wurde durch ein Rechtecksignal von 301 Hz und 1 ms Pulsdauer moduliert. Die Anstiegs- und Abfallzeiten der erzeugten Lichtpulse waren < 1 µs. Das Licht der LED fiel auf den fertig prozessierten Teststreifen und regt dort sowohl die Europiummarkierungen als auch das Trägermaterial des Streifens zur Fluoreszenz an. Die Fluoreszenzlebensdauer der Europiumchelate beträgt ca. 600 µs, die des Trägermaterials wenige ns.

Eine Rolling-Shutter Kamera nahm mit einer Bildrate von 60 fps und einer Belichtungszeit von 500 µs fortlaufend Bilder des Teststreifens auf. Die Zeilenrate der Kamera betrug etwa 15 µs. Die Ausrichtung der Kamera ist Zeilen parallel zur Länge des LFT. Der Streifen wurden optimal bildfüllend erfasst. Es wurden ca. 100 Bilder werden aufgezeichnet.

Die Bilderfassung der Kamera erfolgte zeilenweise von oben nach unten. D.h. nur aktive Zeilen integrierten das auf sie einfallende Licht. Die oberste Zeile wurde zuerst aktiv, jeweils darunterliegende Zeilen folgten mit einer Frequenz von 1/15 µs. Jede Zeile blieb für die gewählte Belichtungszeit (500 µs) aktiv. Es schob sich also ein ca. 35 Zeilen hohes Fenster aktiver Zeilen über das Bildfeld. Die zur Bildaufnahme benötigte Zeit war die Bildhöhe geteilt durch die Zeilenfrequenz plus die Belichtungszeit.

Wäre die Beleuchtung während der gesamten Belichtungszeit aktiv, würde lediglich eine helle Fläche entstehen. Die gepulste Lichtquelle hingegen erzeugt ein Streifenmuster. Ein beleuchteter Streifen entsteht immer dann, wenn das Fenster aktiver Zeilen von einem Beleuchtungspuls "getroffen" wird.

Da die Pulsrate der Beleuchtungsquelle kein ganzzahliges Vielfaches der Bildrate der Kamera ist, verschieben sich die Streifen zwischen zwei Bildern gegeneinander. Nach einigen hundert Bildern ist damit jede Zeile des Bildes in jedem relativen Zustand von Zeile und Lichtquelle mindestens einmal erfasst.

### Bezugszeichenliste

10 Lateral-Flow-Assay
12 Anregungslichtquelle
14 2D-Kamera
16 Probenaufnahmevertiefung
18 Teststreifens
20 freiliegender Bereich
22 Testbalken
24 Kontrollbalken
26 von der Kamera erfasster Bereich des Lateral-Flow-Assay
28 Ansteuereinheit
30 Ansteuer- und Bildauswerteeinheit
32 helle Streifen
34 dunkle Streifen
35 Lichtschweif
36 erste auf einen hellen Streifen folgende Zeile eines dunklen Streifens
A Messwert
B Messwert

## Patentansprüche

1. Verfahren zur Ermittlung der Intensität der Lumineszenz von in einem Testfeld z.B. eines Immunoassays, z.B. eines Lateral-Flow-Assays, vorhandenen Markern mit einer bekannten, für den Zeitverlauf der Lumineszenz repräsentativen Zeitkonstante, wobei das Testfeld zumindest in einem Teilbereich für Anregungslicht reflektierend ist und wobei bei dem Verfahren
- das Testfeld mit gepulstem Anregungslicht beleuchtet wird, das eine Pulsperiode und eine Pulsdauer aufweist,
- das gepulst beleuchtete Testfeld mittels einer einen Rolling-Shutter-Bildsensor mit einem 2D-Photodiodenarray aufweisenden Kamera aufgenommen wird, wobei der Bildsensor unter Verwendung einer Bildperiode, die der Kehrwert der Bildwiederholrate ist, einer Zeilenfrequenz für die sequenzielle Weiterschaltung der Aktivierung einer Zeile von Photodioden des 2D-Photodiodenarrays, einer Integrationsdauer, für die eine Zeile aktiv geschaltet bleibt, und einer Bildaufnahmedauer betrieben wird, innerhalb der sämtliche Zeilen von Photodioden des 2D-Photodiodenarrays einmal aktiviert worden sind, wobei jede Photodiode ein für die jeweilige Intensität von empfangenem Licht repräsentatives Signal liefert,
- die Pulsperiode des Anregungslichts höchstens gleich der Bildaufnahmedauer des Bildsensors ist,
- infolge der gepulsten Beleuchtung durch die Kamera Bilder des Testfeldes aufgenommen werden, die wechselweise aufeinanderfolgende parallele helle und dunkle Streifen aufweisen, wobei die hellen Streifen infolge von Reflektion des Anregungslichts aus dem Testfeld und infolge der Lumineszenz potenzieller Marker und/oder infolge einer potenziellen Autolumineszenz des Testfeldes entstehen und wobei die dunklen Streifen infolge des in einer Beleuchtungspause zwischen zwei aufeinanderfolgenden Beleuchtungspulsen unterbleibenden Anregungslichts entsteht, und
- diese Streifen stationär in den Bildern sind sofern die Pulsperiode ein ganzzahliger Bruchteil der Bildperiode ist, und sich zwischen aufeinanderfolgenden Bildern verschieben sofern die Pulsperiode ein nicht-ganzzahliger Bruchteil der Bildperiode ist,
- wobei dann, wenn sich im Testfeld Marker befinden, innerhalb der dunklen Streifen zumindest einige der Photodioden einiger Zeilen des 2D-Photodiodenarrays eine Lumineszenz detektieren, was sich in einem oder mehreren der dunklen Streifen der Bilder als Linien- oder Bandbereiche zeigt, die unter abklingender Intensität quer zur Erstreckung der hellen und dunklen Streifen ausgehend von einem hellen Streifen zu dem auf diesen zeitlich folgenden benachbarten dunklen Streifen verlaufen, und
- wobei anhand der abklingenden Helligkeit der Lumineszenz innerhalb eines dunklen Streifens und der bekannten, den Zeitverlauf der Lumineszenz-Lebensdauer definierenden Zeitkonstante auf die Intensität der Lumineszenz zu einem vorgegebenen Referenzzeitpunkt geschlossen wird.

2. Verfahren nach Anspruch 1, **dadurch gekennzeichnet,**
- **dass** die Pulsperiode ein nicht-ganzzahliger Bruchteil der Bildperiode ist
- **dass** mit der Kamera so viele Bilder aufgenommen werden, bis jede Zeile von Photodioden des 2D-Photodiodenarrays während mindestens zweier Beleuchtungspulse aktiviert wird und/oder aktiviert bleibt, wobei der jeweilige zeitliche Abstand vom Ende des jeweiligen vorhergehenden Beleuchtungspulses unterschiedlich ist, und
- **dass** anhand der während der besagten mindestens zwei Beleuchtungspulsen von einer oder mehreren Photodiode einer solchen Zeile gelieferten, für die Lumineszenzintensität repräsentativen Signale und anhand des durch die bekannte Zeitkonstante repräsentierten Zeitverlaufs der Lumineszenz-Lebensdauer auf die Intensität zu einem vorgegebenen Referenzzeitpunkt geschlossen wird.

3. Verfahren nach Anspruch 1, **dadurch gekennzeichnet,**
- **dass** die Pulsperiode der Lichtquelle ein ganzzahliger Bruchteil der Bildperiode ist,
- **dass** in den Bildern stationäre helle und dunkle Streifen aufgenommen werden,
- **dass** das Testfeld gegenüber der Kamera senkrecht zu den stationären Streifen verschoben wird und
- **dass** während dieser Verschiebung so viele Bilder aufgenommen werden dass jeder Bereich des Testfeldes mindestens einmal in einem dunklen Streifen erfasst wird.

4. Verfahren nach einem der Ansprüche 1 oder 3, **dadurch gekennzeichnet, dass** der Referenzzeitpunkt das Ende des einen hellen Streifen verursachenden Beleuchtungspulses oder das Ende der auf einen Beleuchtungspuls folgenden Beleuchtungspause ist.

5. Verfahren nach Anspruch 1, **dadurch gekennzeichnet,**
- **dass** mit der Kamera so viele Bilder aufgenommen werden, dass jede Zeile von Photodioden des 2D-Photodiodenarrays zumindest einmal zu demjenigen Zeitpunkt aktiviert wird und/oder ist, der den Beginn der auf das Ende eines Beleuchtungspulses folgenden Beleuchtungspause definiert, und
- **dass** dieser Zeitpunkt der Referenzzeitpunkt und das von einer Photodiode einer Zeile gelieferte Signal die zu ermittelnde Intensität der Lumineszenz repräsentiert.
